Europäisches Patentamt

European Patent Office

Office européen des brevets

(19)

(11) Numéro de publication: **0 240 384**
**A1**

## (12) DEMANDE DE BREVET EUROPEEN

(21) Numéro de dépôt: **87400402.1**

(22) Date de dépôt: **24.02.87**

(51) Int. Cl.⁴: **G 01 T 1/29**

(30) Priorité: **28.02.86 FR 8602876**

(43) Date de publication de la demande:
**07.10.87 Bulletin 87/41**

(84) Etats contractants désignés: **DE GB IT NL**

(71) Demandeur: **THOMSON-CSF**
**173, Boulevard Haussmann**
**F-75379 Paris Cédex 08 (FR)**

(72) Inventeur: **Ayral, Jean-Luc**
**THOMSON-CSF SCPI 19, avenue de Messine**
**F-75008 Paris (FR)**

**Maillot, Christian**
**THOMSON-CSF SCPI 19, avenue de Messine**
**F-75008 Paris (FR)**

**Micheron, François**
**THOMSON-CSF SCPI 19, avenue de Messine**
**F-75008 Paris (FR)**

(74) Mandataire: **Lepercque, Jean et al**
**THOMSON-CSF SCPI 19, avenue de Messine**
**F-75008 Paris (FR)**

(54) **Système de visualisation à mémoire.**

(57) Le système de visualisation à mémoire comprend :
- un support d'enregistrement (2) comportant une couche d'un matériau luminophore (20) capable de stocker une énergie provenant d'un faisceau lumineux (F1) des électrodes 23, 24, encadrant le matériau luminophore (20) et lui appliquant un champ électrique pour libérer sous forme d'un faisceau (F2) l'énergie précédemment stockée ;
- un dispositif optique de transmission (3) placée sur le trajet du faisceau (F2) ;
- un capteur recevant ce faisceau (F2) et traduisant l'intensité du faisceau lumineux en signal électrique ;
- un circuit de traitement (8) recevant ledit signal électrique, le traitant et commandant son affichage sur un dispositif de visualisation (9).

Ce système peut trouver des applications intéressantes dans les appareils de radiographie et notamment dans les appareils de radiographie à rayons X, à rayons γ ou à ultra-violets.

FIG_1

EP 0 240 384 A1

**Description**

SYSTEME DE VISUALISATION A MEMOIRE

La présente invention concerne un système de visualisation à mémoire. Ce système permet de former tout d'abord une image latente, dont la révélation s'effectue par stimulation électrique, sous forme d'émission lumineuse à une longueur d'onde en général supérieure à celle utilisée à l'enregistrement. Plus précisément, ce dispositif concerne l'imagerie en rayons X, avec un accès électrique de type séquentiel.

Le procédé d'imagerie que nous proposons est appelé à remplacer le film photographique, encore largement employé aujourd'hui dans de nombreux domaines, et en particulier pour l'imagerie en rayons X. Dans le cas où le système s'avère assez rapide pour pouvoir effectuer plusieurs images par secondes, il peut également se substituer au tube intensificateur d'image radiologique, dans le même domaine que l'imagerie en rayons X.

Rappelons que le film photographique, s'il possède de nombreux avantages (sensibilité, résolution) qui justifient son emploi comme détecteur d'image, n'en a pas moins plusieurs inconvénients, d'une part liés aux propriétés physiques, à savoir une dynamique réduite, d'autre part liés à la nature du détecteur, à savoir la manipulation nécessaire de la plaque pour son développement. De plus, une fois l'image obtenue sur le support film, la digitalisation de l'image en vue de traitements ultérieurs impose une étape supplémentaire demandant l'emploi d'un micro densitomètre.

Par ailleurs, le film est à la fois le détecteur d'image, et le support final de l'image. Or dans un système d'imagerie, les performances demandées au détecteur (dynamique/sensibilité) et celles demandées au support (fort contraste et faible bruit) sont, dans une certaine mesure, antagonistes. Ainsi le film apparaît comme un compromis, qui nécessairement sacrifie les performances des deux fonctions.

D'autres méthodes d'imagerie ont vu le jour, pour tenter de s'affranchir de ces difficultés. Nous pouvons citer, pour l'imagerie en rayons X, d'une part les techniques d'imagerie électrostatique ou xéroradiographie, d'autre part une technique d'imagerie numérisée dans laquelle un luminophore photostimulable par laser est utilisé comme matériau mémoire pour le stockage temporaire de l'image en rayons X qui est décrite dans le document "Radiology" 148, 833, Sept 83.

La Xéroradiographie donne des images dont les contours sont fortement contrastés. Ceci est dû à la non-linéarité du développement. Par contre, cette technique est environ vingt fois moins sensible aux hautes énergies que les meilleures techniques d'imagerie utilisant une combinaison film-écran renforçateur; les doses d'exposition sont par conséquent plus élevées. A l'heure actuelle, cette technique est restreinte à l'observation du sein et des extrémités.

Le procédé décrit dans le document précédemment cité a tous les avantages de l'imagerie sur film sans en posséder les inconvénients : la plaque sensible à mémoire et le support final de l'image sont séparés. Appliqué à l'imagerie en rayons X, le système possède la résolution du film photographique, une dynamique et une sensibilité supérieures à celles du film. Le système permet en outre de réduire la dose de rayonnement au malade par rapport aux systèmes utilisant le film. De plus, il permet le traitement d'images par ordinateur.

Comme pour le film, les deux inconvénients suivants doivent attirer l'attention. D'une part, il est nécessaire de manipuler la cassette pour révéler l'image mémorisée. L'acquisition de l'image ne peut pas s'effectuer in situ. D'autre part, le procédé de lecture par laser de la plaque sensible est long : en effet, le temps d'acquisition d'une image est de l'ordre d'une minute. Ceci interdit la prise rapide de clichés qui sont intéressants pour le suivi des phénomènes transitoires.

C'est pourquoi l'invention concerne un système permettant de s'affranchir de ces inconvénients et plus particulièrement un système d'imagerie à mémoire dont la lecture peut se faire in situ, sans aucune manipulation.

L'invention concerne donc un système de visualisation à mémoire comprenant une source de rayonnement éclairant, avec un faisceau d'une longueur d'onde déterminée, un corps à explorer, un support sensible à la longueur d'onde recevant le faisceau retransmis par le corps, caractérisé en ce que :

- le support comporte, d'une part, une couche d'un matériau luminophore capable de stocker une énergie, provenant dudit faisceau, dans des états métastables et de la libérer sous l'effet d'une excitation électrique, sous la forme d'un flux lumineux et, d'autre part, des moyens d'application de ladite excitation électrique au matériau luminophore ;

- le système de visualisation, comportant en outre un dispositif optique de transmission recevant le flux lumineux et le retransmettant ;

- un capteur recevant le flux lumineux retransmis par le dispositif optique de transmission et traduisant l'intensité du flux lumineux en signal électrique ;

- un circuit de traitement recevant ledit signal électrique le traitant et commandant son affichage sur un dispositif de visualisation.

Les différents objets et caractéristiques de l'invention apparaitront plus clairement dans la description qui va suivre faite en se reportant aux figures annexées qui représentent :

- la figure 1, un schéma général du système de l'invention ;
- la figure 2, une vue détaillée d'un écran sensible à la lumière et conforme à l'invention ;
- la figure 3, un exemple de réalisation du système de l'invention avec des électrodes linéaires ;
- la figure 4, un autre exemple de réalisation du système de l'invention avec des électrodes linéaires ;

- la figure 5, un exemple de réalisation du système de l'invention avec des électrodes recouvrant toute la surface de l'écran sensible à la lumière ;

- les figures 6 et 7, une variante de réalisation du système de la figure 4 ;

- la figure 8, une variante de réalisation du système de la figure 5 ;

- la figure 9, une autre variante de réalisation du système de la figure 4 ;

- les figures 10 et 11, un exemple de réalisation du système de l'invention selon lequel les fibres optiques sont logées dans l'écran sensible à la lumière ;

-La figure 12, une variante de réalisation du système de l'invention comportant des électrodes bloquantes.

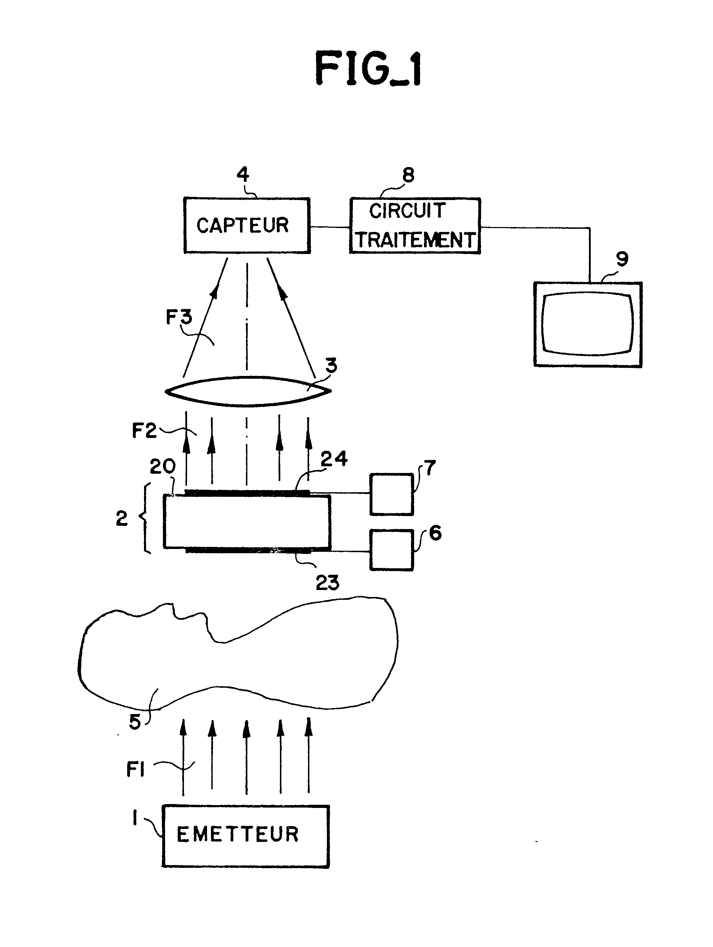

En se reportant à la figure 1, on va tout d'abord décrire un schéma général du système de l'invention.

Sur cette figure, on trouve un émetteur de rayonnement 1, par exemple un émetteur de rayons X, émettant un faisceau F1, vers un corps humain 5 dont on veut radiographier une partie. De l'autre côté du corps humain 5 par rapport à l'émetteur 1 se trouve un écran 2 sensible au rayonnement émis par l'émetteur 1. Cet écran 2 contient un matériau luminophore 20 dont les caractéristiques seront décrites ultérieurement, et qui présente la propriété d'absorber l'énergie véhiculée par le faisceau F1.

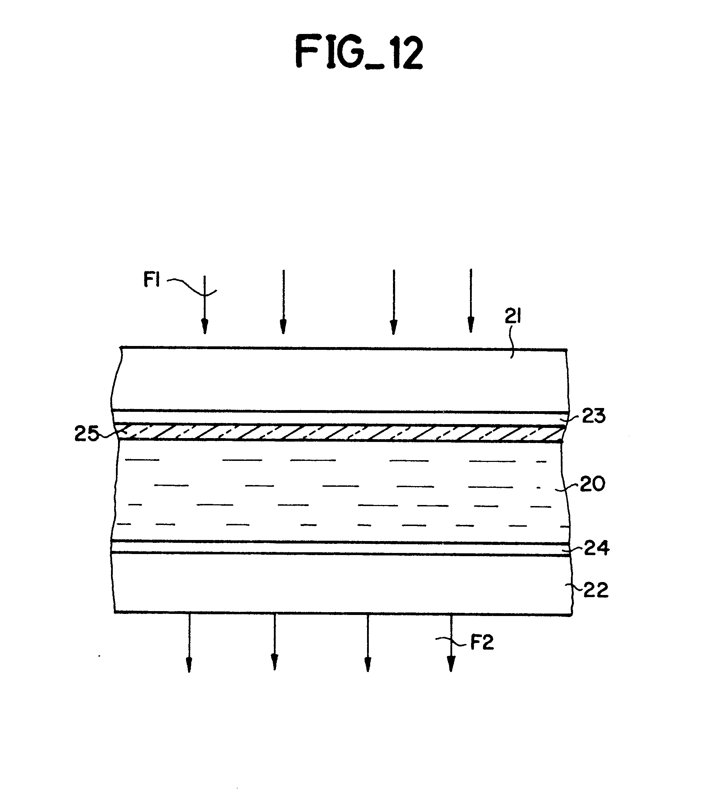

Selon l'invention, l'écran 2 possède de part et d'autre du matériau luminophore 20, deux électrodes 23 et 24. L'une au moins de ces électrodes peut être bloquante comme cela sera décrit en relation avec la figure 12. Ces électrodes sont connectées à des sources de tension 6 et 7 qui permettent de porter les électrodes 23 et 24 à des niveaux de tension différentes de façon à ce que le matériau 20 soit soumis à un champ électrique. Ce champ électrique a pour effet d'exciter le matériau luminophore et de libérer sous forme d'un flux lumineux F2, l'énergie accumulée lors de la réception du faisceau F1 de rayons X.

Le faisceau F2 est transmis à un dispositif de transmission optique telle qu'une lentille 3 qui retransmet un faisceau F3 à un capteur 4 qui traduit l'image véhiculée par le faisceau F2 en signaux électriques.

Les signaux électriques sont transmis a un circuit de traitement 8 qui commande l'affichage de l'image transmise sur un dispositif de visualisation 9.

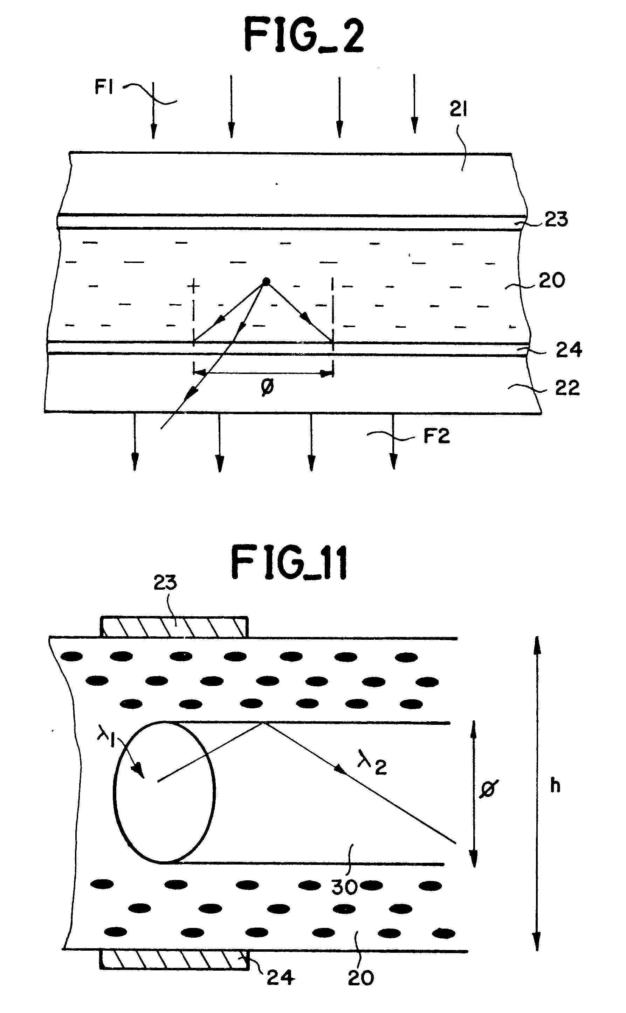

En se reportant à la figure 2, on va décrire un exemple de réalisation de l'écran 2.

Cet écran comporte deux plaques 21 et 22 enserrant un matériau luminophore. Sur les faces de ces plaques en contact avec le matériau luminophore sont disposées en vis-à-vis les électrodes 23 et 24. L'une au moins de ces électrodes peut être bloquante, ce caractère bloquant est obtenu en intercalant un diélectrique entre le luminophore et l'électrode.

La plaque 21 et l'électrode 23 disposée du côté réception du faisceau F1 sont transparentes à la longueur d'onde du faisceau F1. Dans le cas d'un fonctionnement aux rayons X, il laisse donc passer ces rayons de façon que le matériau luminophore accumule de l'énergie.

La plaque 22 et l'électrode 24 sont transparentes au rayonnement lumineux émis par le matériau luminophore sous l'effet d'une excitation électrique.

L'écran 2 est sensible à une énergie comprise entre quelques électrons-volts et plusieurs dizaines de kilo-électrons-volts (rayonnement visible, ultraviolet, X), voire même atteindre plusieurs Méga-électrons-volts pour application en radiothérapie.

Le matériau luminophore 20 est enrobé d'un liant organique (polymère) ou inorganique (verre, céramique).

Les luminophores stimulables par un champ électrique sont capables, d'une part de stocker dans des états métastables de très longue durée de vie l'énergie absorbée provenant du rayonnement incident, d'autre part de libérer cette énergie sous forme de luminescence lorsqu'un champ électrique est appliqué dans le matériau. L'énergie émise par luminescence est proportionnelle à l'énergie absorbée, c'est-à-dire au nombre de photons du rayonnement incident. L'énergie d'un photon émis est inférieure à celle d'un photon incident. En particulier, il est possible de restituer une image visible à partir d'un enregistrement en rayons X.

Ce phénomène a été mis en évidence en particulier avec les matériaux Sulfures de Zinc dopés par exemple au cuivre, et est connu dans ce cas sous le nom d'effet Gudden et Pohl. Dans le Sulfure de Zinc, les temps de stockage de l'image latente sont très longs (plusieurs heures) et les champs à appliquer pour libérer la luminescence sont de l'ordre de $10^4$ V/cm.

La plaque sensible au rayonnement transportant l'image est composée, comme nous l'avons dit précédemment, d'un matériau luminophore qui se présente sous forme de poudre, et qui est mis en forme dans un liant.

Pour minimiser la dégradation du rapport signal à bruit pendant la détection, il est nécessaire, dans une première étape de formation de l'image latente, que l'absorption de la radiation par le matériau soit très efficace.

Dans le cas d'une radiation peu énergétique, visible ou ultraviolette, il est nécessaire que la largeur de la bande interdite soit inférieure à l'énergie des photons incidents. Cette assertion pourra être légèrement modifiée s'il existe une bande d'absorption à partir d'un niveau situé dans la bande interdite. Les Sulfures de Zinc dopés au cuivre, ou au Plomb, ou au Manganèse conviennent dans ces cas. Les concentrations en dopant sont faibles, 10 à 100 ppm.

Dans le cas d'une radiation photonique énergétique, (Rayons X, $\gamma$) l'interaction avec le matériau est différente de ce qui précède. L'absorption du rayonnement est d'autant meilleure que le numéro atomique moyen du matériau est grand. Or, l'absorption doit se faire sur une très faible épaisseur pour que la résolution de l'image révélée par le champ électrique soit bonne. En effet, la luminescence émise sous l'action d'un champ électrique est isotrope, c'est-à-dire qu'elle a lieu dans toutes les directions de l'espace. Le phénomène sera compris à l'aide de la figure 2. Si la couche active est trop épaisse, un point émetteur de photons apparaîtra sous forme d'une tâche au moment de la détection comme l'indique la largeur Ø de la tache.

D'autres arguments contribuent à diminuer l'épaisseur de la couche active. En effet, plus l'épaisseur est importante, plus les pertes par diffusion sur les grains ou de réabsorption de la lumière émise sont importantes.

Il existe donc, pour une résolution donnée, une épaisseur de matériau optimale. Dans le cas de l'excitation en Rayons X, à chaque énergie des rayons X à détecter correspond donc une classe de matériaux de numéro atomique moyen donné pour une absorption minimale fixée à 50%.

En imagerie en Rayons X, il est nécessaire de distinguer deux domaines d'énergie des rayons X :

Le premier concerne celui de la mammographie, où l'énergie moyenne des rayons X est d'environ 20 keV. Dans ce cas, les matériaux sulfures de type ZnS dopés au Cuivre, au Plomb ou au Manganèse et SrS dopés aux terres rares conviennent.

Pour le domaine de l'imagerie à énergie des rayons X supérieure à 50 keV qui est celui par exemple de la radiographie osseuse ou pulmonaire, il est nécessaire de mettre en oeuvre des matériaux de numéros atomiques moyens plus élevés. Cette dernière classe de matériaux est utilisable de même pour des énergies encore plus élevées (MeV). Parmi ces matériaux nous trouvons : la famille des Oxysulfures $Ln_2O_2S$, ou Ln = La, Y, Gd ; des matériaux BaFX ou X = Cl, Br, I ; des Sulfures BaS et SrS ; et des matrices Y $VO_4$, $Y_2O_2$ qui sont étudiées et utilisées, soit comme des matériaux scintillateurs, soit comme des matériaux électroluminescents. Ces matrices seront optimisées pour le procédé du point de vue de la granulométrie et du dopage pour permettre, d'une part un piégeage à fort rendement des états excités sous l'effet du rayonnement à enregistrer, d'autre part un dépiégeage efficace sous forme de recombinaison radiative sous l'action du champ électrique. Un mélange de ces différents matériaux peut être utilisé.

Le liant dans lequel est incluse la poudre luminophore est choisi en fonction de ses propriétés électriques et optiques. En particulier, sa permittivité diélectrique sera telle que le champ effectif localisé dans les grains soit maximum. D'autre part, il devra être transparent à la lumière émise sous l'action du champ électrique et posséder un indice de réfraction optique proche de celui de la poudre, de façon à limiter les pertes optiques.

Parmi les polymères utilisables pour la préparation de telles couches, nous citerons par exemple le Polymethylmetacrylate (PMMA) préparé en solution, ou les résines époxy telles que celles commercialisées sous le nom d' Araldite.

Le liant pourra également être un verre à bas point de fusion.

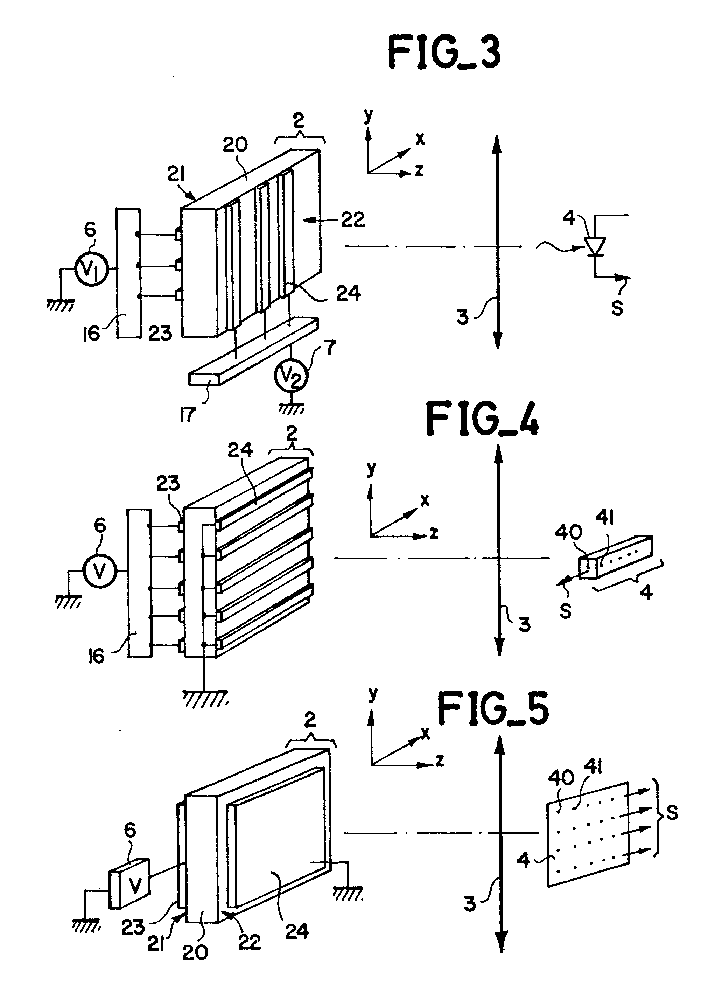

En se reportant à la figure 3, on va maintenant décrire un premier exemple de réalisation du système de l'invention. Sur cette figure, on a représenté uniquement que l'écran 2 et ces circuits de commande 6 et 7, la lentille 3 et le capteur 4. Ces différents éléments sont disposés selon un repère orthonormé XYZ avec l'écran parallèle au plan XY et l'axe optique de la lentille 3 parallèle à l'axe Z. Les autres éléments de la figure 1 restent les mêmes et n'ont pas été représentés.

Dans cet exemple de réalisation, les électrodes dont l'une peut être bloquante sont dans ce cas déposées de part et d'autre du matériau luminophore 20, d'un côté sous forme de lignes 23, de l'autre sous forme de colonnes 24. A l'intersection d'une ligne et d'une colonne est défini un petit volume de mélange liant luminophore, d'épaisseur e.

L'effet décrit précédemment possède un seuil pour un champ électrique $E_0$, tel que $E_0 = V_{0/e}$, il suffit de polariser une ligne 23 à la tension $-\frac{V}{2}$ et une colonne 24 à la tension $+\frac{V}{2}$, la tension V vérifiant les deux relations : $V > V_0$ et $\frac{V}{2} < V_0$, pour ne stimuler qu'un seul élément d'image 23-24.

Le capteur 4 comprend ici un détecteur ponctuel 4. Il comprend un détecteur des photons émis par l'écran 2 à une longueur d'onde généralement supérieure à celle utilisée lors de l'enregistrement. Ce détecteur peut être : un tube photomultiplicateur dont la photocathode est choisie en fonction de l'énergie des photons émis ou une photodiode Silicium.

Les électrodes conductrices 24 en regard du détecteur 4 sont consitutées d'un matériau transparent conducteur, tel qu'une couche mince d'Oxyde d'Etain et d'Indium ; les autres électrodes 23 sont constituées d'une couche mince métallique, par exemple d'Aluminium, servant également de réflecteur. Dans le cas où l'une des électrodes est bloquante, le diélectrique peut être une couche organique, par exemple un polymère, ou minérale, par exemple un verre ou un polycristal.

Le dispositif 3 est une optique. Nous entendons par optique tout moyen capable de transporter, avec le meilleur rendement possible, les photons émis par l'écran 2, après stimulation électrique, vers le détecteur 4. Dans le cas où le détecteur 4 est ponctuel, dans le sens où il ne permet qu'une mesure à un instant donné, le dispositif 3 sera par exemple : une lentille ou une fibre optique fixe reliant un élément d'image de l'écran 2 au détecteur 4, dans le cas d'une fibre optique on pourra prévoir des moyens non représentés permettant de déplacer l'écran 2 dans les deux directions X et Y pour présenter séquentiellement la position de chaque élément d'image devant la face d'entrée de la fibre optique. On pourra prévoir également une nappe de fibres optiques ou tout guide de lumière se présentant sous forme d'une barrette linéaire devant l'écran 2 et pouvant être transformé en un guide concentré devant l'entrée du détecteur 4. Dans ce cas, un seul déplacement de la plaque est requis : selon Y si la barrette couvre une rangée d'éléments d'image selon X.

Dans ces conditions, après avoir été exposé aux rayons X après traversée du corps 5, l'écran 2 mémorise une image résultant de l'imagerie du corps 5. Sous la commande de l'opérateur, l'image mémorisée peut être visualisée à volonté. Pour cela, des potentiels d'excitation sont appliqués aux électrodes 23 et 24 à l'aide de générateurs 6 et 7, et de commutateurs séquentiels 16, 17 connectant successivement les générateurs 6 et 7 aux différentes électrodes. Par ailleurs, le détecteur 4 détecte le faisceau lumineux émis par chaque point de croisement à chaque commande d'excitation et fournit un signal électrique sur une sortie S vers le circuit de traitement.

Le capteur 4 peut également être un ensemble de détecteur 40, 41... alignés comme cela est représenté en figure 4.

Dans ce cas, le capteur 4 est une barrette de dispositifs à transfert de charge, permettant de faire l'acquisition simultanée des photons émis par une ligne (par exemple selon la direction X de l'écran sensible. Les électrodes sont donc disposées sous forme de lignes parallèles entre elles de part et d'autre de l'écran contenant le luminophore 20. L'électrode 24 faisant face au capteur est transparente. La tension de commande est appliquée d'une ligne à la suivante, séquentiellement, par un générateur 6 et un commutateur séquentiel 16 connecté aux électrodes 23, tandis que les électrodes 24 sont connectées à un potentiel de référence, une terre par exemple.

Le dispositif optique 3 peut être : une lentille imageant la ligne stimulée de l'écran 2 sur la barrette de détecteur 4. Tout guide de lumière de type nappe de fibres optiques se présentant sous forme d'une barrette linéaire placée devant l'écran 2 et ayant la forme d'une barrette de dimension inférieure ou égale à celle du dispositif 4. Ce guide s'étendant selon la direction X par exemple est associé à un déplacement de la plaque selon Y de telle manière qu'à chaque instant, la ligne stimulée de la plaque se trouve devant le guide de lumière. Ainsi pour la lecture de l'écran 2, le commutateur séquentiel 16 commute successivement le générateur 6 sur les différentes électrodes 23 et la position de l'écran 2 par rapport à l'ensemble "optique 3 - capteur 4" est déplacée selon l'axe Y, pour lire à chaque instant une ligne excitée de l'écran.

Selon un autre exemple de réalisation représenté en figure 5, l'écran 2 possède deux électrodes 23 et 24 recouvrant toute la surface de l'écran.

Dans cette configuration, le capteur 4 est un capteur bidimensionnel permettant l'acquisition de l'image en une seule fois. Lors de la restitution, le champ est dans ce cas appliqué uniformément dans tout l'écran à l'aide des deux électrodes déposées uniformément sur les deux faces. L'électrode 24 en regard du capteur 4 est transparente. Il n'y a aucun déplacement mécanique de la plaque. Le capteur 4 est une matrice de type DTC ou la surface sensible d'une caméra TV à bas niveau de lumière, associé à une optique 3 qui est dans ce cas une lentille permettant de faire l'image de l'écran 4 sur le capteur 4.

L'enregistrement de l'image ayant été réalisé sous forme d'image latente, la stimulation électrique est donc appliquée sur les électrodes en un point, une ligne ou la surface totale de la plaque à l'aide d'un générateur d'impulsions de tension. La tension est commutée ligne après ligne dans les exemples de réalisation des figures 3 et 4.

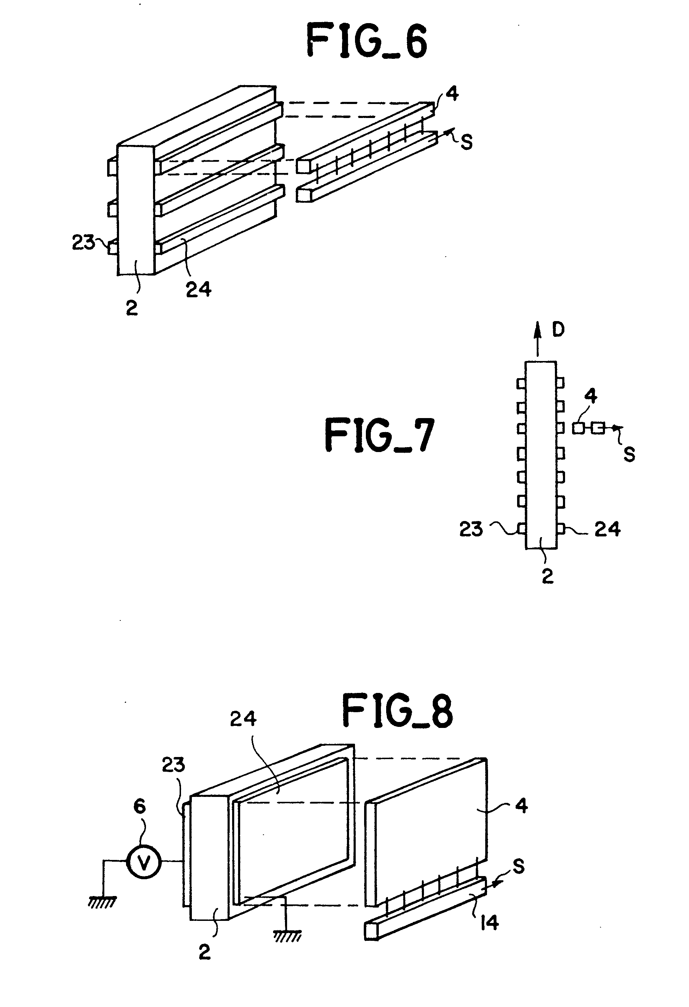

La figure 6 représente une variante de réalisation du système de la figure 4 qui permet de s'affranchir du dispositif optique 3.

En effet, on utilise comme capteur de lumière une barrette de DTC ou de photodiodes de longueur égale à celle d'une ligne de l'écran sensible 2. L'espace entre l'électrode transparente 24 de l'écran et la barrette 4 est minimisé de façon à éviter les pertes optiques. De même que dans le système de la figure 3, l'écran est déplacé pas à pas après chaque lecture de ligne par rapport au capteur 4.

La figure 7 représentant une vue de côté le système de la figure permettant de mettre en évidence le déplacement selon la flèche D de l'écran 2 devant le capteur 4. Il est bien évident que selon un autre mode de réalisation on peut envisager de déplacer le capteur 4 devant l'écran 2 maintenu alors fixe.

Selon une variante de réalisation représentée en figure 8, on s'affranchit du dispositif optique 3 de la figure 5.

Dans cette variante, on utilise comme capteur de lumière 4 une matrice de photodiodes dont la surface est égale à celle de l'écran sensible 2. Cette matrice peut être celle qui s'obtient par des techniques de réalisation sur Silicium amorphe. Comme dans la variante précédente, la matrice de photodiodes est plaquée contre la plaque sensible. Le procédé ne demande alors aucun mouvement mécanique. Un registre de sortie 14 permet de lire la matrice de photodiodes et de transférer les résultats de lecture sur une sortie S vers un circuit de traitement 8 non représenté.

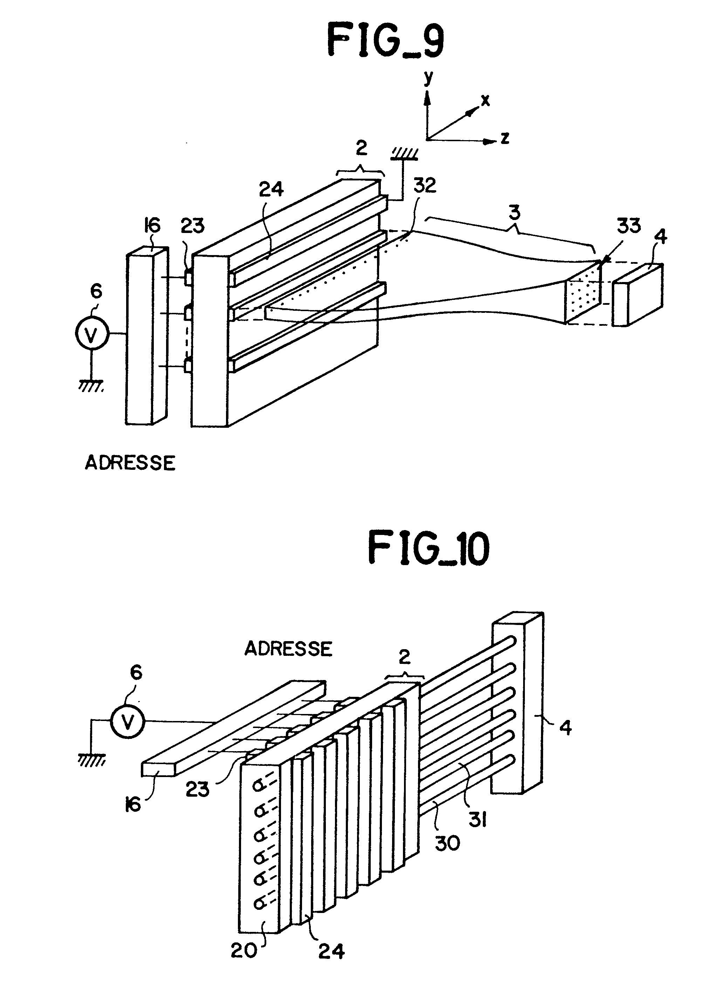

Selon une autre variante de réalisation du système de la figure 4, un réseau de fibres optiques 3 relient une ligne de l'écran 2 à un capteur 4 constitué de détecteurs arrangés en matrice. Une telle réalisation est représentée en figure 9.

Pour cela, les extrémités 32 des fibres sont disposées selon une ligne parallèle à l'axe X. L'écran 2 est mobile selon une direction parallèle à l'axe Y de façon à ce que la totalité des lignes d'écran définies par les lignes d'électrodes 23, 24 soit explorée par la ligne des extrémités de fibres 32.

Le capteur 4 comporte un arrangement matriciel nxm de détecteurs. Chaque ligne d'écran comporte alors nxm éléments d'image et le nombre de fibres 32 est également nxm. Les extrémités des fibres 33 sont disposées sous forme d'une matrice de même dimension que la matrice de détecteurs de façon que chaque extrémité de fibre 33 éclaire un détecteur du capteur 4.

Les électrodes 23 sont alimentées successivement en tension par un générateur 6 et un circuit d'adresse 16. Les électrodes 24 sont à potentiel fixe, la terre par exemple.

Le capteur peut être, en fait, une matrice de dispositifs à transfert de charge photosensibles qui sont connectés au circuit de traitement non représenté sur la figure 9.

Ainsi, une ligne d'informations lumineuses correspondant à une ligne d'image est convertie en une matrice de signaux électriques exploitable par le circuit de traitement.

Selon une autre variante de réalisation représentée par les figures 10 et 11, un réseau de fibres parallèles 30 et 31 sont noyées dans le matériau luminophore 20 de l'écran.

L'écran 2 comporte de part et d'autre du matériau luminophore 20, des électrodes parallèles 23, 24 et orthogonales aux fibres 30, 31.

Les électrodes 23 sont alimentées successivement en tension par un générateur 6 et un circuit d'adresse 16. Les électrodes 24 sont à un potentiel fixe, la terre par exemple.

A chaque alimentation d'une électrode 23, le matériau luminophore, compris entre cette électrode et l'électrode 24 située en vis-à-vis, est excité et émet selon l'énergie accumulée antérieurement, lors d'une exposition aux rayons X, une énergie lumineuse, qui comme cela est représenté en figure 11, est captée par chaque fibre. La lumière captée est piégée par chaque fibre, et par réflexions successives est transmis à un capteur 4 comprenant des détecteurs disposés en lignes.

A noter que la disposition du système de la figure 9 peut être appliquée au système de la figure 10 en prévoyant un capteur 4 de forme matricielle et en arrangeant les extrémités des fibres, aboutissant sur le capteur, de façon également matricielle.

On voit donc que dans cette variante, le couplage optique entre l'écran 2 et le capteur 4 de photons, qui est une barrette de photodétecteur, s'effectue à l'aide de fibres optiques qui sont intégrées dans le matériau luminophore 20.

L'adressage électrique se fait par exemple par colonnes. Dans ce cas, les fibres optiques sont disposées selon les lignes, comme indiqué sur la figure 10. Pour que les photons émis lors de la stimulation électrique soient bien captés par chaque fibre, il est possible d'utiliser une fibre optique convertisseur de longueur d'onde, c'est-à-dire qui absorbe les photons émis par le luminophore, à une longueur d'onde $\lambda_1$ puis émet des photons avec un rendement proche de l'unité à une longueur d'onde supérieure $\lambda_2$. Le processus d'absorption, de réémission et guidage est représenté sur la figure 11. Ce procédé d'imagerie présente l'intérêt de s'affranchir de tout mouvement mécanique pendant la relecture.

Dans la description qui précède, il a été mentionné à plusieurs reprises que les électrodes 23, 24 peuvent être bloquantes. La figure 12 représente une variante de l'exemple de réalisation de la figure 2 dans lequel l'électrode 23 a été rendue bloquante en prévoyant une couche d'un matériau diélectrique 25 tel qu'un matériau organique. Dans le cas où l'électrode 23 est en matériau métallique, la couche de diélectrique 25 est déposée sur cette électrode métallique. Il est également possible, bien que cela ne soit pas représenté sur les figures, de rendre les électrodes 24 bloquantes que ce soit seulement les électrodes 24 ou en complément des électrodes 23. Pour cela, une couche de diélectrique est prévue entre le matériau luminophore et les électrodes 24.

## Revendications

1. Système de visualisation à mémoire comprenant une source de rayonnement (1) éclairant, avec un faisceau (F1) d'une longueur d'onde (λ) déterminée, un corps (5) à explorer, un support (2) sensible à la longueur d'onde (λ) recevant le faisceau retransmis par le corps (5), caractérisé en ce que :
- le support (2) comporte, d'une part, une couche (20) d'un matériau luminophore (20) capable de stocker une énergie, provenant dudit faisceau (F1), dans des états métastables et de la libérer sous l'effet d'une excitation électrique, sous la forme d'un flux lumineux (F2) et, d'autre part, des moyens d'application (23, 24) de ladite excitation électrique au matériau luminophore ;
- le système de visualisation, comportant en outre un dispositif optique de transmission (3) recevant le flux lumineux (F2) et le retransmettant ;
- un capteur recevant le flux lumineux (F3) retransmis par le dispositif optique de transmission (3) et traduisant l'intensité du flux lumineux (F3) en signal électrique ;
- un circuit de traitement (8) recevant ledit signal électrique le traitant et commandant son affichage sur un dispositif de visualisation (9).

2. Système de visualisation à mémoire selon la revendication 1, caractérisé en ce que la couche (20) de matériau luminophore est enserrée entre une première plaque (21) transparente au faisceau (F1) de ladite longueur d'onde (λ) et une deuxième plaque (22) transparente au flux lumineux (F2), les moyens d'application de ladite excitation électrique comportant une première électrode (23) située sur la première plaque et une deuxième électrode (24) située sur la deuxième plaque, des moyens d'alimentation électrique (6, 7) connectés à ces électrodes (23, 24) permettant de porter ces électrodes à des potentiels différents.

3. Système de visualisation à mémoire selon la revendication 2, caractérisé en ce que la première et la deuxième plaques sont planes.

4. Système de visualisation à mémoire selon la revendication 1, caractérisé en ce que le dispositif optique de transmission (3) est une lentille.

5. Système de visualisation à mémoire selon la revendication 1, caractérisé en ce que le dispositif optique de transmission est une ou plusieurs fibres optiques (30, 31, 32...).

6. Système de visualisation à mémoire selon la revendication 1, caractérisé en ce que le capteur (4) comporte une pluralité de détecteurs (40, 41).

7. Système de visualisation à mémoire selon la revendication 2, caractérisé en ce qu'il comporte, sur la première plaque (21) une série d'électrodes horizontales (23) parallèles entre elles, sur la deuxième plaque (22), une série d'électrodes verticales (24) parallèles également entre elles et définissant avec les électrodes horizontales (23) des points de croisement dans le matériau luminophore (20).

8. Système de visualisation à mémoire selon la revendication 7, caractérisé en ce qu'il comporte des moyens de commande permettant de déplacer l'ensemble dispositif optique de transmission (3)-capteur (4) par rapport au support (2) pour permettre la lecture des différents points de croisement par le capteur (4).

9. Système de visualisation à mémoire selon la revendication 2, caractérisé en ce qu'il comporte sur la première plaque (21) une série délectrodes (23) parallèles entre elles, sur la deuxième plaque (22), une série d'électrodes (24) parallèles aux électrodes précédentes, de même longueur et situées en vis-à-vis avec elles, le capteur (4) comportant une série de détecteurs (40, 41...) disposés selon une ligne parallèle aux électrodes (23, 24) et permettant de recevoir un flux lumineux issus d'une ligne de matériau luminophore situé entre une électrode (23) de la première plaque (21) et une électrode (24) de la deuxième plaque, des moyens d'adressage permettant d'alimenter en tension sélectivement deux électrodes en vis-à-vis des deux plaques.

10. Système de visualisation à mémoire selon la revendication 9, caractérisé en ce que le capteur (4) a une même longueur que les électrodes, et qu'il comporte des moyens de commande pour déplacer le capteur (4) dans un plan parallèle au plan des plaques (21, 22) et orthogonalement aux électrodes.

11. Système de visualisation à mémoire selon la revendication 2, caractérisé en ce que la première électrode (23) recouvre la totalité d'une face de la première plaque (21), que la deuxième électrode (24) recouvre la totalité de la deuxième plaque (22), et que le capteur (4) comporte une série de détecteurs (40, 41 ...) disposés dans un plan image parallèle au plan des plaques (21, 22) et permettant de lire différents points du matériau luminophore (20) contenu entre les deux plaques.

12. Système de visualisation à mémoire selon la revendication 11, caractérisé en ce que les détecteurs (40, 41...) sont disposés selon une matrice.

13. Système de visualisation à mémoire selon la revendication 11, caractérisé en ce que le capteur (4) a les mêmes dimensions que le support (2) et est plaqué contre la plaque (21) du support (2).

14. Système de visualisation à mémoire selon la revendication 5, caractérisé en ce qu'il comporte sur la première plaque (21) une série d'électrodes (23) parallèles entre elles, sur la deuxième plaque (22) une série d'électrodes (24) parallèles aux électrodes précédentes, de même longueur, et situées en vis-à-vis avec elles, deux électrodes en vis-à-vis définissant une ligne de matériau luminophore, des premières extrémités d'un nombre déterminé (nxm) de fibres étant alignées selon une ligne de matériau luminophore de façon à capter le flux lumineux émis par cette ligne de matériau luminophore, le capteur (4) comportant une matrice de nxm détecteurs (40, 41...), des moyens de commande permettant de déplacer relativement les premières extrémités de fibres par rapport au support (2) de façon à ce que ces premières extrémités permettent la lecture successive des différentes lignes de matériau luminophore.

15. Système de visualisation à mémoire selon la revendication 1, caractérisé en ce qu'il comporte au moins une fibre disposée au sein de la couche de matériau luminophore (20) et ayant une extrémité couplée au capteur (4).

16. Système de visualisation à mémoire selon l'une quelconque des revendications 1 ou 2, caractérisé en ce qu'il comporte sur la première plaque (21) une série d'électrodes (23) parallèles entre elles, sur la deuxième plaque (22) une série d'électrodes (24) parallèles aux électrodes précédentes, de même longueur et situées en vis-à-vis avec elles, lesdites fibres étant disposées à l'intérieur de la couche de matériau luminophore (20), dans un plan parallèle aux plaques et orthogonalement aux électrodes, une extrémité de chaque fibre étant couplée à un détecteur (40, 41...) du capteur (4).

17. Système de visualisation à mémoire selon l'une quelconque des revendications 2 à 16, caractérisé en ce que la première électrode (23) est bloquante.

18. Système de visualisation à mémoire selon l'une quelconque des revendications 2 à 16, caractérisé en ce que la deuxième électrode (24) est bloquante.

19. Système de visualisation à mémoire selon la revendication 17, caractérisé en ce qu'il comporte entre la première électrode (23) et le matériau luminophore (20) une couche d'un matériau diélectrique (25).

20. Système de visualisation à mémoire selon la revendication 18, caractérisé en ce qu'il comporte entre la deuxième électrode (24) et le matériau luminophore (20) une couche d'un matériau diélectrique.

# FIG_1

0240384

# FIG_2

# FIG_11

FIG_3

FIG_4

FIG_5

0240384

FIG_6

FIG_7

FIG_8

0240384

# FIG_9

ADRESSE

# FIG_10

ADRESSE

# FIG_12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 466 869 (SECRETARY OF STATE FOR DEFENCE) * Page 1, lignes 11-43; figures * | 1 | G 01 T 1/29 |
| A | | 2,3,5, 18 | |
| | --- | | |
| Y | EP-A-0 007 105 (FUJI PHOTO FILM CO. LTD.) * Page 9, lignes 10-23; figures 7,9,11 * | 1 | |
| A | | 4 | |
| | --- | | |
| A | EP-A-0 156 258 (FUJI PHOTO FILM CO. LTD.) * Figures 5,6 * | 5,6,14 | |
| | --- | | DOMAINES TECHNIQUES RECHERCHES (Int. Cl.4) |
| A | GB-A-1 185 832 (THORN ELECTRICAL INDUSTRIES LTD.) * Page 5, lignes 34-66; figures 1,2 * | 1-3,19 ,20 | G 01 T H 01 L H 05 B G 21 K |
| | --- | | |
| A | US-A-4 210 805 (KOBAYASHI et al.) * Figures * | 7,9-11 ,14 | |
| | ----- | | |

Le présent rapport de recherche a été établi pour toutes les revendications

| Lieu de la recherche | Date d'achèvement de la recherche | Examinateur |
|---|---|---|
| LA HAYE | 14-07-1987 | DATTA S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82